Europäisches Patentamt

European Patent Office

Office européen des brevets

(11) Veröffentlichungsnummer: **0 280 072**
**B1**

# (12) EUROPÄISCHE PATENTSCHRIFT

(45) Veröffentlichungstag der Patentschrift:
**13.06.90**

(21) Anmeldenummer: **88101451.8**

(22) Anmeldetag: **02.02.88**

(51) Int. Cl.⁵: **F16D 23/14**

(54) **Kraftfahrzeug-Reibungskupplung.**

(30) Priorität: **25.02.87 DE 3706031**

(43) Veröffentlichungstag der Anmeldung:
**31.08.88 Patentblatt 88/35**

(45) Bekanntmachung des Hinweises auf die Patenterteilung:
**13.06.90 Patentblatt 90/24**

(84) Benannte Vertragsstaaten:
**DE ES FR GB IT**

(56) Entgegenhaltungen:
**GB-A- 2 157 791**

(73) Patentinhaber: **INA Wälzlager Schaeffler KG,
Industriestrasse 1-3 Postfach 1220,
D-8522 Herzogenaurach(DE)**

(72) Erfinder: **Parzefall, Walter, Kettelerstrasse 1,
D-8526 Bubenreuth(DE)**

(74) Vertreter: **Klug, Horst, Dipl.-Ing. (FH), c/o INA Wälzlager
Schaeffler KG Postfach 12 20,
D-8522 Herzogenaurach(DE)**

# Beschreibung

Die Erfindung betrifft eine Kraftfahrzeug-Reibungskupplung mit einem Ausrücklager, an dem ein Kupplungshebel angreift, mit einem axial verschieblichen Druckring, der mittels an seinem Umfang verteilter Verriegelungselemente mit einem umlaufenden Innenring des Ausrücklagers axial zugfest verbunden ist, und mit den Verriegelungselementen zugeordneten Entriegelungsnasen, die an einem Entriegelungsring ausgebildet sind und die bei axialer Verschiebung die Verriegelungselemente außer Eingriff von dem Innenring bringen.

Eine derartige Reibungskupplung ist in der DE–A 3 150 150 beschrieben.

Bei dieser sind als Verriegelungselemente zwischen dem Druckring und dem Innenring tangentiale Rollen vorgesehen, die in der Betriebsstellung teils in einer Nut des Innenrings und teils in einem Schlitz des Druckrings liegen und so die axiale Betätigungskraft der Kupplung übertragen. An einem den Druckring umschließenden weiteren Ring sind Entriegelungsnasen ausgebildet. Wird dieser Ring verschoben, dann schieben die Entriegelungsnasen die Rollen aus der Nut vollständig in den Schlitz. Dadurch ist der Innenring des Ausrücklagers von dem Druckring der Kupplung entkoppelt. Es ist dann die Demontage möglich. Allerdings muß dabei der Ring gegen die Kraft einer Feder verschoben werden. Die Kraft dieser Feder muß hinreichend groß sein, um zu vermeiden, daß die Rollen sich unter Fliehkraftwirkung von selbst aus der Nut des Innenrings lösen. Dementsprechend groß ist die nötige Betätigungskraft für die Verschiebung des Rings.

Außerdem muß bei der DE–A 3 150 150 der Ring zum Verschieben der Rollen bei der Demontage solange gegen die Kraft der Feder gehalten werden, bis die Nut des Innenrings unter den Rollen weggezogen ist, da andernfalls die Rollen wieder in ihre Betriebsstellung gehen. Dies erschwert die Demontage.

Aufgabe der Erfindung ist es, eine Reibungskupplung der eingangs genannten Art so auszugestalten, daß die Verriegelungselemente für die Demontage ohne Werkzeug vom Innenring gelöst werden können, ohne daß manuell eine axiale Verschiebung der Entriegelungsnasen vorgenommen werden muß und die Entriegelungsnasen für die Demontage manuell in ihrer Entriegelungsstellung gehalten werden müssen.

Erfindungsgemäß ist obige Aufgabe bei einer Reibungskupplung der eingangs genannten Art dadurch gelöst, daß an dem Kupplungshebel ein Entriegelungsschieber von einer Ruhestellung in eine Entriegelungsstellung radial verschieblich gelagert ist, der eine auf den axial verschieblichen Entriegelungsring einwirkende Anformung bzw. Rampe aufweist, die den Entriegelungsring in der Entriegelungsstellung axial verschoben hält, dessen Entriegelungsnasen den Verriegelungselementen zugewandte Schrägen aufweisen, die bei der axialen Verschiebung die Verriegelungselemente vom Innenring lösen.

In der Entriegelungsstellung sind durch manuelle, radiale Verschiebung des Entriegelungsschiebers die Entriegelungsnasen axial so gegen die Verriegelungselemente gedrückt, daß diese vom Innenring gelöst gehalten sind. Es ist dann die Demontage auf einfache Weise möglich. In der Ruhestellung ist der Entriegelungsschieber von den Entriegelungsnasen getrennt. Diese können dadurch mit dem Druckring bzw. dem Innenring umlaufen.

Günstig ist auch, daß die Entriegelungsnasen nicht durch die Betätigungskräfte der Kupplung belastet sind. Die zur Betätigung der Entriegelungsnasen nötigen Kräfte sind gering. Denn zur Entriegelung brauchen nur die Verriegelungselemente betätigt zu werden

Günstig ist außerdem, daß die für die Montage nötige Verschiebungsstrecke und die für die Entriegelung nötige Bewegung voneinander unabhängig sind, so daß auch größere Toleranzen eine sichere Montage und Demontage nicht beeinträchtigen.

Durch eine axiale Verschiebung des Entriegelungsringes beaufschlagen alle Entriegelungsnasen gleichzeitig die ihnen zugeordneten Verriegelungselemente, so daß sich diese vom Innenring lösen.

Vorzugsweise ist der Entriegelungsring am Innenring selbst axial verschieblich, jedoch drehfest angeordnet. Dabei ist der Entriegelungsring am Innenring unverlierbar gehalten.

Weitere vorteilhafte Ausgestaltungen der Erfindung ergeben sich aus weiteren Unteransprüchen und der folgenden Beschreibung von Ausführungsbeispielen. In der Zeichnung zeigen:

Figur 1 eine Teilansicht einer Kraftfahrzeug-Reibungskupplung mit einem Ausrücklager im Teilschnitt,

Figur 2 eine vergrößerte Teilansicht der Darstellung nach Figur 1 und

Figur 3 eine Figur 2 entsprechende Darstellung eines weiteren Ausführungsbeispiels der Erfindung.

Eine gezogene Kraftfahrzeug-Reibungskupplung weist ein Ausrücklager (1) auf, das an einem in einer Kupplungsglocke angeordneten Führungsrohr (2) axial verschieblich ist. An dem Ausrücklager (1) greift ein Kupplungshebel (3) an, dessen eines Ende an einem Abstützbolzen (4) gelagert ist und an dessen anderem Ende ein Betätigungsglied (5) angreift. Das Betätigungsglied (5) kann von einem Hydraulikzylinder oder einem Seilzug gebildet sein.

Im Gehäuse (6) des Ausrücklagers (1) ist ein Innenring (7) drehbar gelagert, der an seinem äußeren Ende einen radial nach innen gerichteten Kragen (8) aufweist.

An einem Druckring (9) der Kupplung liegt eine Tellerfeder (10) an. Diese sitzt an der einen der nicht näher dargestellten Kupplungsscheiben. Eine weitere Tellerfeder (11) stützt den Druckring (9) am Innenumfang der Tellerfeder (10) ab. Am Außenumfang des Druckrings (9) sind als Verriegelungselemente drei Winkelsegmente (12) schwenkbar gelagert. An sie sind im Bereich des Kragens (8) Haken (13) angeformt. Die Winkelsegmente (12) sind mit Federn (14) vorgespannt.

Bei der Montage des Ausrücklagers (1) am Druckring (9) schiebt sich der Kragen (8) des Innenrings (7) über die Haken (13), wobei diese gegen die Kraft der Feder (14) nach innen schwenken. Übergreift der Kragen (8) die Haken (13), dann schnappen diese hinter den Kragen (8). Dadurch ist eine zugfeste Verbindung zwischen dem Innenring (7) und dem Druckring (9) geschaffen.

Wird der Kupplungshebel (3) in Richtung des Pfeiles (E) verschwenkt, dann verschiebt sich das Ausrücklager (1) in Richtung des Pfeiles (F). Dabei zieht der Kragen (8) des Innenrings (7) an den Haken (13) der Winkelsegmente (12), so daß sich auch der Druckrings (9) in Richtung des Pfeiles (F) verschiebt. Die Tellerfeder (10) folgt dieser Bewegung und trennt dadurch die Kupplungsscheiben.

Am Kupplungshebel (3) ist ein Entriegelungsschieber (15) radial, in Richtung des Pfeiles (R) verschieblich gelagert. Der Entriegelungsschieber (15) erstreckt sich dabei etwa parallel zum Kupplungshebel (3). Am Kupplungshebel (3) sind Langlöcher (16,17) vorgesehen, in die Schnapphaken (18,19) des Entriegelungsschiebers (15) eingerastet sind. Der Entriegelungsschieber (15) ist mit einer Durchbrechung (20) versehen, durch die das Betätigungsglied (5) ragt. Solange das Betätigungsglied (5) die Durchbrechung (20) durchragt, ist der Entriegelungsschieber (15) gegen ein Verschieben blockiert.

Auf den Innenring (7) ist ein Entriegelungsring (21) aufgeschoben. Dieser ist mit Entriegelungsnasen (22) versehen. Dabei ist jedem Winkelsegment (12) bzw. Haken (13) wenigstens jeweils eine Entriegelungsnase (22) zugeordnet. Die Entriegelungsnasen (22) durchragen Ausnehmungen des Innenrings (7) nach innen hin und sind mit Schrägen (23) versehen, die den Haken (13) zugewandt sind.

Der Entriegelungsring (21) ist gegenüber dem Innenring (7) axial verschieblich. Um den Entriegelungsring (21) an dem Innenring (7) drehfest zu halten, sind am Entriegelungsring (21) Bolzen (24) vorgesehen, die den Innenring (7) durchgreifen. Der Entriegelungsring (21) ist damit axial verschiebbar, drehfest und unverlierbar am Innenring (7) gelagert.

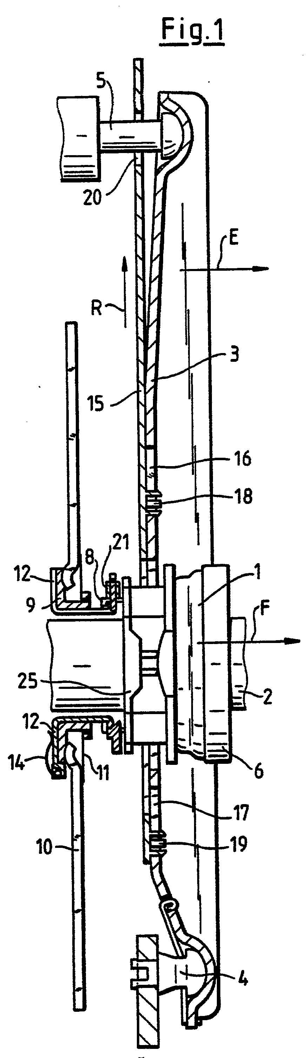

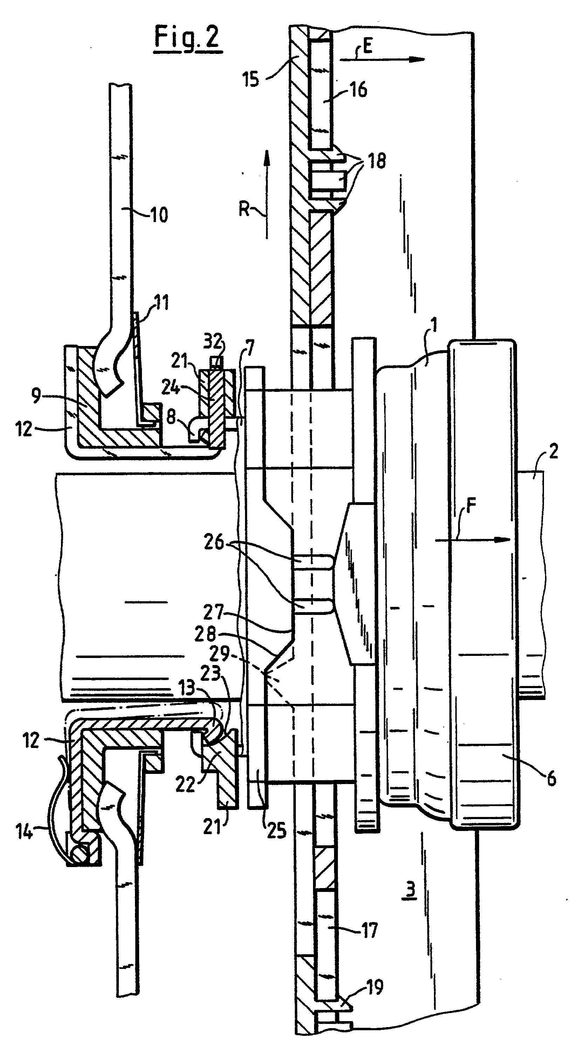

Beim Ausführungsbeispiel nach den Figuren 1 und 2 ist am Gehäuse (6) des Ausrücklagers (1) ein Schubring (25) drehfest und axial verschiebbar gehalten. Hierfür sind am Schubring (25) am Außenumfang verteilt Schnappnasen (26) ausgebildet, die in entsprechende Schlitze des Gehäuses (6) greifen. Der Schubring (25) liegt zwischen dem Entriegelungsring (21) und dem Entriegelungsschieber (15).

Am Schubring (25) ist eine Stufe (27) mit einer Schrägfläche (28) ausgebildet. Dieser ist eine keilförmige Anformung (29) des Entriegelungsschiebers (15) zugeordnet.

Bei der Demontage ist die Wirkungsweise des Ausführungsbeispiels nach den Figuren 1 und 2 folgende:

Nach dem Lösen des Betätigungsgliedes (5) wird der Entriegelungsschieber (15) aus seiner in den Figuren 1 und 2 dargestellten Ruhestellung in Richtung des Pfeiles (R) in seine Entriegelungsstellung gezogen. Dabei gleitet die Anformung (29) längs der Schrägfläche (28), so daß sich der Schubring (25) entgegen der Richtung des Pfeiles (F) versetzt. Hierbei schlägt er an den Entriegelungsring (21) an und verschiebt diesen entgegen der Richtung des Pfeiles (F) so, daß die Schrägen (23) seiner Entriegelungsnasen (22) auf de Haken (13) treffen und dadurch die Winkelsegmente (12) gegen die Kraft der Federn (14) verschwenken. Steht die Anformung (29) auf der Stufe (27) auf, dann sind die Haken (13) von dem Kragen (8) des Innenrings (7) gelöst. Danach kann das Ausrücklager (1) vom Druckring (9) abgezogen werden.

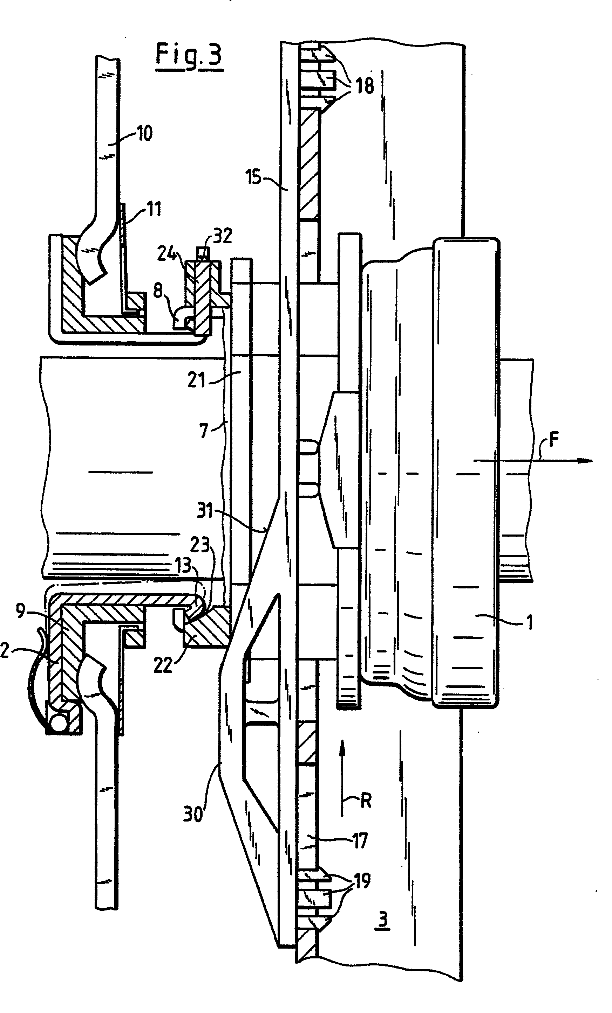

Beim Ausführungsbeispiel nach Figur 3 ist der Schubring (25) nicht vorgesehen. Hier ist am Entriegelungsschieber (15) eine Rampe (30) mit einer Schrägfläche (31) ausgebildet.

Die Wirkungsweise bei der Demontage ist hier etwa folgende:

Nach dem Entfernen des Betätigungsgliedes (5) wird der Entriegelungsschieber (15) in Richtung des Pfeiles (R) verschoben. Die Schrägfläche (31) seiner Rampe (30) verschiebt dabei den Entriegelungsring (21) entgegen der Richtung des Pfeiles (F). Dessen Entriegelungsnasen (22) führen dabei mittels ihrer Schrägen (23) zu einem Verschwenken der Winkelsegmente (12), bis die Haken (13) vom Kragen (8) gelöst sind.

Um zu vermeiden, daß der Entriegelungsring (21) in seiner Verdrehlage ausgerichtet an dem Innenring (7) vormontiert werden muß, ist der Bolzen (24) im Entriegelungsring (21) verschieblich und mittels einer Feder (32) druckbelastet. Der Bolzen (24) schnappt dann beim Verdrehen des Entriegelungsringes (21) gegenüber dem Innenring (7) unter der Wirkung der Feder (32) in die ihm zugeordnete Öffnung des Innenringes (7).

## Patentansprüche

1. Kraftfahrzeug-Reibungskupplung mit einem Ausrücklager (I), an dem ein Kupplungshebel (3) angreift, mit einem axial verschieblichen Druckring (9), der mittels an seinem Umfang verteilter Verriegelungselemente (12) mit einem umlaufenden Innenring (7) des Ausrücklagers (1) axial zugfest verbunden ist, und mit den Verriegelungselementen (12) zugeordneten Entriegelungsnasen (22), die an einem Entriegelungsring (21) ausgebildet sind, und die bei axialer Verschiebung die Verriegelungselemente (12) außer Eingriff von dem Innenring (7) bringen, dadurch gekennzeichnet, daß an dem Kupplungshebel (3) ein Entriegelungsschieber (15) von einer Ruhestellung in eine Entriegelungsstellung radial verschieblich gelagert ist, der eine auf den axial verschieblichen Entriegelungsring (21) einwirkende Anformung (29) bzw. Rampe (30) aufweist, die den Entriegelungsring (21) in der Entriegelungsstellung axial verschoben hält, dessen Entriegelungsnasen (22) den Verriegelungselementen (12) zugewandte Schrägen (23) aufweisen, die bei der axialen Verschiebung die Verriegelungselemente (12) vom Innenring (7) Lösen.

2. Reibungskupplung nach Anspruch 1, dadurch gekennzeichnet, daß der Entriegelungsring (21) am Innenring (7) axial verschieblich, jedoch drehfest angeordnet ist.

3. Reibungskupplung nach Anspruch 2, dadurch gekennzeichnet, daß der Entriegelungsring (21) den Innenring (7) umschließt, daß der Innenring (7) einen nach innen gerichteten Kragen (8) aufweist und daß die Verriegelungselemente (12) am Druckring (9) schwenkbar gelagert sind und den Kragen (8) mit Haken (13) hintergreifen, denen die Schrägen (23) der Entriegelungsnasen (22) so gegenüberstehen, daß die Entriegelungsnasen (22) in der Entriegelungsstellung die Haken (13) vom Kragen (8) lösen.

4. Reibungskupplung nach einem der vorhergehenden Ansprüche, dadurch gekennzeichnet, daß zwischen dem Entriegelungsring (21) und dem Entriegelungsschieber (15) ein axial verschieblicher Schubring (25) angeordnet ist, der drehfest am Ausrücklager (1) gelagert und in der Entriegelungsstellung vom Entriegelungsschieber (15) axial verschoben ist.

5. Reibungskupplung nach Anspruch 4, dadurch gekennzeichnet, daß der Schubring (25) eine Stufe (27) mit einer Schrägfläche (28) und der Entriegelungsschieber (15) die Anformung (29) aufweist, die keilförmig ausgebildet und der Schrägfläche (28) zugeordnet ist.

6. Reibungskupplung nach einem der vorhergehenden Ansprüche, dadurch gekennzeichnet, daß der Entriegelungsschieber (15) mittels Schnapphaken (18, 19) in Langlöchern (16, 17) des Kupplungshebels (3) verschieblich gelagert ist.

7. Reibungskupplung nach einem der vorhergehenden Ansprüche, dadurch gekennzeichnet, daß der Entriegelungsschieber (15) in seiner Ruhestellung durch ein Betätigungsglied (5) des Kupplungshebels (3) gesichert ist.

## Claims

1. Friction clutch for automotive vehicles with a release bearing (1) engaged by a clutch lever (3), an axially displaceable thrust collar (9) connected in a joint withstanding tension by means of locking elements (12) distributed over its periphery with a rotating inner ring (7) of the release bearing (1) and with unlocking lugs (22) associated with the locking elements (12) and formed on an unlocking ring (21) and which on axial displacement, disengage the locking elements (12) from the inner ring (7), characterized in that an unlocking slide (15) is mounted on the clutch lever (3), for radial displacement from an inoperative position into an unlocking position and is provided with a formation (29) or a ramp (30) which acts on the axially displaceable unlocking ring (21) and retains it axially displaced in the unlocking position, the unlocking lugs (22) of the unlocking ring (21) being provided with bevels (23) facing the locking elements (12) which, on axial displacement, disengage the locking elements (12) from the inner ring (7).

2. Friction clutch according to Claim 1, characterized in that the unlocking ring (21) is arranged axially displaceably but secure against rotation on the inner ring (7).

3. Friction clutch according to Claim 2, characterized in that the unlocking ring (21) surrounds the inner ring (7), the inner ring (7) is provided with an inwardly directed collar (8) and the locking elements (12) are pivotably mounted on the thrust collar (9) and engage behind the collar (8) with hooks (13) opposite which the bevels (23) of the unlocking lugs (22) are so located that, in the unlocking position, the unlocking lugs (22) disengage the hooks (13) from the collar (8).

4. Friction clutch according to one of the preceding claims, characterized in that, between the unlocking ring (21) and the unlocking slide (15), an axially displaceable thrust ring (25) is arranged which is mounted secure against rotation on the release bearing (1) and which, in the unlocking position, is axially displaced by the unlocking slide (15).

5. Friction clutch according to Claim 4, characterized in that the thrust ring (25) is provided with a step (27) with an inclined surface (28) and the unlocking slide (15) is provided with the formation (29) which is wedge-shaped and is associated with the inclined surface (28).

6. Friction clutch according to one of the preceding claims, characterized in that the unlocking slide (15) is displaceably mounted in slots (16, 17) of the clutch lever (3) by means of snap hooks (18, 19).

7. Friction clutch according to one of the preceding claims, characterized in that the unlocking slide (15) is secured, when in its inoperative position, by an actuating member (5) of the clutch lever (3).

## Revendications

1. Embrayage à friction pour véhicules automobiles avec une butée de débrayage (1) engagée par un levier de débrayage (3), une bague de poussée (9) axialement déplaçable qui, au moyen d'éléments de verrouillage (12) répartis sur sa périphérie, est reliée en un joint axial auto-serrant en tension avec une bague interne rotative (7) de la butée de débrayage (1), et avec des talons de déverrouillage (22) associés avec les éléments de verrouillage (12) et formés sur un anneau de déverrouillage (21) qui, lors d'un déplacement axial, dégagent les éléments de verrouillage (12) de la bague interne (7), caractérisé en ce que sur le levier de débrayage (3) est monté un coulisseau de déverrouillage (15) qui peut être radialement déplacé d'une position de repos dans une position de déverrouillage et qui est pourvu d'une formation (29) ou d'une rampe (30) qui agit sur l'anneau axialement déplaçable de déverrouillage (21) et le retient axialement déplacé en position de déverrouillage, les talons de déverrouillage (22) de l'anneau de déverrouillage (21) étant pourvus de chanfreins (23) faisant face aux éléments de verrouillage (12) et les dégageant de la bague interne (7) lors d'un déplacement axial.

2. Embrayage à friction selon la revendication 1, caractérisé en ce que l'anneau de déverrouillage (21) est agencé, axialement déplaçable mais immobilisé en rotation, sur la bague interne (7).

3. Embrayage à friction selon la revendication 3, caractérisé en ce que l'anneau de déverrouillage (21) entoure la bague interne (7), la bague interne (7) est pourvue d'un collet (8) dirigé vers l'intérieur, et les éléments de verrouillage (12) sont montés pivotants sur la bague de poussée (9) et s'engagent derrière le collet (8) par des crochets (13) auxquels les chanfreins (23) des talons de déverrouillage (22) font face de telle façon que, dans la position de déverrouillage, les talons de déverrouillage (22), dégagent les crochets (13) du collet (8).

4. Embrayage à friction selon une des revendications précédentes, caractérisé en ce qu'entre l'anneau de (21) et le coulisseau de déverrouillage (15), est agencé un anneau glissant, axialement déplaçable (25), qui est monté à être immobilisé en rotation sur la butée de débrayage (1) et qui, dans la position de déverrouillage, est axialement déplacé par le coulisseau de déverrouillage (15).

5. Embrayage à friction selon la revendication 4, caractérisé en ce que l'anneau glissant (25) est pourvu d'un seuil (27) ayant une face inclinée (28) et le coulisseau de déverrouillage (15) est pourvu d'une formation (29) en forme de clavette qui est associée avec la face inclinée (28).

6. Embrayage à friction selon une des revendications précédentes, caractérisé en ce que le coulisseau de déverrouillage (15) est monté, déplaçable, au moyen de crochets à déclic (18, 19) dans des trous oblongs (16, 17) du levier de débrayage (3).

7. Embrayage à friction selon une des revendications précédentes, caractérisé en ce que, dans la position de repos, le coulisseau de déverrouillage (15) est arrêté par un membre d'actionnement (5) du levier de débrayage (3).

## Fig.1

Fig.2

Fig.3